# EUROPÄISCHE PATENTSCHRIFT

(11) **EP 2 280 405 B1**
(45) Veröffentlichungstag und Bekanntmachung des Hinweises auf die Patenterteilung: **24.05.2017**
(21) Anmeldenummer: 10007769.2
(22) Anmeldetag: 27.07.2010
(51) Int. Cl.: H01H 9/02, G07C 9/00, B29C 65/16, B60R 25/00

(54) **Verfahren zur Herstellung eines Gehäuses, insbesondere für einen elektronischen Schlüssel**
Procedure for manufacturing a housing, in particular for an electronic key
Procédé pour fabriquer un boîtier, en particulier pour une clé électronique

(30) Priorität: 28.07.2009 DE 102009034998
(43) Veröffentlichungstag der Anmeldung: 02.02.2011
(73) Patentinhaber: Marquardt GmbH, 78604 Rietheim-Weilheim (DE)
(72) Erfinder: Stauß, Gerd, 72474 Winterlingen (DE); Angst, Wolfgang, 72355 Schömberg (DE); Wehrle, Mike, 78554 Aldingen (DE)
(74) Vertreter: Otten, Roth, Dobler & Partner mbB Patentanwälte

(56) Entgegenhaltungen:
- EP-A1- 1 762 368
- EP-A2- 1 847 970
- EP-A2- 1 863 048
- WO-A2-02/057353
- DE-A1-102007 040 295
- DE-A1-102009 038 304
- Berger et al: "High-gloss injection molded part surfaces", HANSER eLibrary , vol. 52, no. 4 April 2010 (2010-04), pages 211-221, Retrieved from the Internet: URL:http://www.hanser-elibrary.com/doi/abs /10.3139/120.110121 [retrieved on 2014-11-18]
- Wikipedia: "Formenbau", , page 5, Retrieved from the Internet: URL:http://de.wikipedia.org/wiki/Formenbau [retrieved on 2014-11-18]

## Beschreibung

Die Erfindung betrifft ein Verfahren zur Herstellung eines Gehäuses nach dem Oberbegriff des Patentanspruchs 1.

Solche Gehäuse werden insbesondere für einen elektronischen Schlüssel, einen Identifikatiotts(ID)-Geber o. dgl. eines Schließsystems in einem Kraftfahrzeug oder einem Automobil verwendet,

Schließsysteme für Kraftfahrzeuge sind zur Steigerung des Komforts für den Benutzer oft mit einem elektronischen Schlüssel ausgestattet. Nach entsprechender Betätigung durch den Benutzer wird zwischen dem Schlüssel und einem Steuergerät im Kraftfahrzeug ein Code, beispielsweise über elektromagnetische Wellen, ausgetauscht, so daß nach positiver Auswertung des Codes die Türen, der Kofferraumdeckel o. dgl. des Kraftfahrzeugs fernbedienbar ent- und/oder verriegelt sowie sonstige Funktionen ausgelöst werden. Desweiteren kann der elektronische Schlüssel neben der Zugangsberechtigung zum Kraftfahrzeug auch die Fahrberechtigung für das Kraftfahrzeug ermöglichen.

Ein derartiger elektronischer Schlüssel, der aus der EP 1 847 970 A2 bekannt ist, besitzt ein Gehäuse, das ein Trägerteil und ein am Trägerteil angeordnetes Gehäuseelement umfasst. Das Gehäuseelement, das in der Art einer Blende ausgestaltet sein kann, weist eine sichtbare Oberfläche auf. In vielen Fällen bestehen aus Kostengründen das Gehäuseelement und/oder das Trägerteil aus Kunststoff, insbesondere aus einem thermoplastischen Kunststoff, wobei das Gehäuseelement und/oder das Trägerteil beispielsweise mittels Spritzgießen hergestellt werden. Häufig fehlt es einem solchen Gehäuse jedoch an einer gewissen Wertanmutung.

Bei dem aus der EP 1 847 970 A2 bekannten elektronischen Schlüssel besteht das Gehäuse aus Gehäuseteilen, die mittels Laserschweißen miteinander verschweißt sein können. Desweiteren zeigt auch die EP 1 863 048 A2 einen elektronischen Schlüssel, bei dem das Gehäuse mittels Laserstrahlung verschweißt ist. Zur Herstellung eines solchen Gehäuses wird das aus Kunststoff bestehende Gehäuseelement in einem Spritzgießwerkzeug abgespritzt. Das Gehäuseelement wird am Trägerteil mittels Laserdurchstrahlschweißen befestigt. Hierbei durchdringt beim Verschweißen die Laserstrahlung im wesentlichen das Gehäuseelement und wird im wesentlichen im Trägerteil absorbiert.

Für das Laserschweißen geeignetes Kunststoffmaterial, das für die Laserstrahlung transmittierend ausgestaltet ist, ist in der EP 1 762 368 A1 beschrieben.

Der Erfindung liegt die Aufgabe zugrunde, die Wertanmutung für ein solches Gehäuse zu erhöhen, insbesondere soll der bekannte Schlüssel lediglich durch äußerliche Änderungen für ein höherwertiges Fahrzeug, wie ein Fahrzeug der Oberklasse, "verschönert" bzw. aufgewertet werden.

Diese Aufgabe wird bei einem gattungsgemäßen Verfahren zur Herstellung eines solchen Gehäuses durch die kennzeichnenden Merkmale des Anspruchs 1 gelöst.

Beim erfindungsgemäßen Verfahren ist das Spritzgießwerkzeug für das Gehäuseelement in dem der sichtbaren Oberfläche zugeordneten Bereich auf Hochglanz poliert, womit die sichtbare Oberfläche des Gehäuseelements eine weitgehend verschwindende sowie allenfalls geringfügige Rauhigkeit, und damit eine glatte Sichtoberfläche, aufweist. Mit Hilfe dieser Maßnahme ist das Gehäuseelement hochglänzend ausgestaltet und das Gehäuse bietet somit, obwohl in kostengünstiger Weise aus Kunststoff bestehend, eine hohe Wertanmutung. Weitere Ausgestaltungen der Erfindung sind Gegenstand der Unteransprüche.

Bevorzugterweise kann desweiteren das Gehäuseelement zumindest an der sichtbaren Oberfläche mit einem Klarlack beschichtet sein. Dadurch wird vor allem eine kratzfeste Ausgestaltung von zumindest der sichtbaren Oberfläche erzielt. Diese Maßnahme wirkt einem Verschleiß der Sichtoberfläche des Gehäuses entgegen. Dadurch bewahrt der elektronische Schlüssel sein hochwertiges Aussehen auch nach längerem Gebrauch.

Damit keine sichtbaren Befestigungselemente am Gehäuse vorhanden sind, womit die Wertanmutung zusätzlich erhöht ist, ist das Gehäuseelement durch Laserschweißen auf dem Trägerteil befestigt, indem das Gehäuseelement von den Laserstrahlen zur Befestigung auf dem darunterliegenden Trägerteil durchstrahlt wird. Hierfür kann das Gehäuseelement aus einem lasertransparenten Kunststoff bestehen. Desweiteren kann das Trägerteil aus einem laserabsorbierenden Kunststoff bestehen. Dadurch können beim Verschweißen die Laserstrahlen das Gehäuseelement weitgehend durchdringen und werden im Trägerteil
weitgehend absorbiert, womit das Gehäuseelement an dessen nichtsichtbarer Oberfläche mit dem Trägerteil in prozeßsicherer Art und Weise stoffschlüssig verbunden ist.

In vielen Verwendungsfällen ist ein farbiges Gehäuse gewünscht, so daß der Kunststoff für das Gehäuseelement und/oder für das Trägerteil mit einem entsprechenden Farbadditiv eingefärbt ist. Aufgrund der hochwertigen Erscheinung ist häufig ein schwarzes Gehäuse gewünscht, so daß der Kunststoff für das Gehäuseelement sowie für das Trägerteil schwarz eingefärbt ist. Kostengünstige Laser für das Kunststoff-Laserschweißen arbeiten vor allem im Infrarot(IR)-Spektralbereich. In diesem Fall ist der Kunststoff für das Gehäuseelement schwarz-IR-transparent für die Durchstrahlung des Lasers sowie der Kunststoff für das Trägerteil schwarz-IR-absorbierend für die Laserstrahlung eingefärbt.

Das Gehäuseelement kann zumindest an der sichtbaren Oberfläche mit einem Klarlack, der beispielsweise aus einem Grundierlack sowie einem Decklack besteht, lackiert werden. Zwecks Unempfindlichkeit gegen Abnutzungen bietet es sich an, daß es sich bei dem Klarlack für das Gehäuseelement um einen mittels Ultraviolett(UV)-Strahlung aushärtenden Klarlack handelt. Dann kann der Klarlack nach Lackieren der sichtbaren Oberfläche des Gehäuseelements mittels Ultraviolett(UV)-Strahlen ausgehärtet werden, wenn ein entsprechender UV-härtbarer Klarlack verwendet wird, um dessen Festigkeit gegen Abnutzung zu erhöhen.

Zweckmäßigerweise ist für das Laserdurchstrahlschweißen der-Kunststoff für das Gehäuseelement weitgehend transparent für die Duxchstrahlung des Lasers eingefärbt und der Kunststoff für das Trägerteil ist weitgehend absorbierend für die Laserstrahlung eingefärbt Bei der Laserstrahlung kann es sich um eine Infrarot(IR)-Laserstrahlung handeln, für die kostengünstige Laser verfügbar sind. Soll das Gehäuse eine schwarze Farbe besitzen, so ist hierzu der Kunststoff für das Gehäuseelement schiwarz-IR-transparent für die Durchstrahlung des Lasers und/oder der Kunststoff für das Trägerteil schwarz-IR-absorbierend für die Laserstrahlung eingefärbt.

Zweckmäßigerweise wird der einfachen Herstellbarkeit halber das Gehäuseelement vor dem Verschweißen mit dem Klarlack beschichtet. In diesem Fall bietet es sich weiterhin an, daß der Klarlack im wesentlichen transparent für die Laserstrahlung ist. Das Laserlichtdurchlässige Grundmaterial des Gehäuseelements sowie der Laserlichtdurchlässige Klarlack ermöglicht es dann, das Gehäuseelement auf das Trägerteil zu schweißen. Somit gelingt es, einen optisch hochwertigen und kratzfesten Schlüssel herzustellen.

Für eine besonders bevorzugte Ausgestaltung ist nachfolgendes festzustellen. Beim Schlüssel werden die Blenden über Laserschweißen auf das Schlüsselgehäuse aufgeschweißt. Das Schlüsselgehäuse ist ein Laserlicht-undurchlässiges Material. Die Blenden sind mit Laserlicht-durchlässigem Material ausgeführt. Bisher weist die sichtbare Oberfläche der Blenden eine Narbung, beispielsweise K31 entsprechend einer normalen Standardoberfläche auf. Nunmehr sind die Blendenwerkzeuge auf Hochglanz poliert. Die Teile werden abgespritzt und anschließend mit einem UV-aüshartenden Klarlack lackiert. Durch das Laserlicht-durchlässige Grundmaterial der Blenden und durch den Laserlichtdurchlässigen Klarlack ist es möglich, diese Blenden auf das Schlüsselgehäuse zu schweißen. Das Laserschweißen solcher lackierter Blenden auf ein Gehäuse eines ID-Gebers in der Art eines, Schlüssel schafft somit einen optisch hochwertigen und kratzfesten Schlüssel.

Die mit der Erfindung erzielten Vorteile bestehen insbesondere darin, daß optisch hochwertige und kratzfeste Oberflächen mittels eines Schweißverfahrens auf einem Gehäuse oder sonstigen Teilen befestigt werden können. Dabei werden die Hochglanzoberflächen
sowohl durch den Lack als auch das Grundsubstrat der Blenden in zuverlässiger Weise gelasert. Dabei ist sichergestellt, daß beim Verschweißen keine Beschädigungen der Hochglanzoberfläche auftreten, was den Ausschuß bei der Herstellung des Gehäuses verringert.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen elektronischen Schlüssel in perspektivischer Ansicht von der Oberseite gesehen,
- Fig. 2: den Schlüssel aus Fig. 1 von der Unterseite gesehen,
- Fig. 3: Einzelteile des Schlüssels bei der Herstellung von der Oberseite gesehen,
- Fig. 4: Einzelteile des Schlüssels bei der Herstellung von der Unterseite gesehen und
- Fig. 5: einen Schnitt entlang der Linie 5-5 in Fig. 3 bzw. Fig. 4.

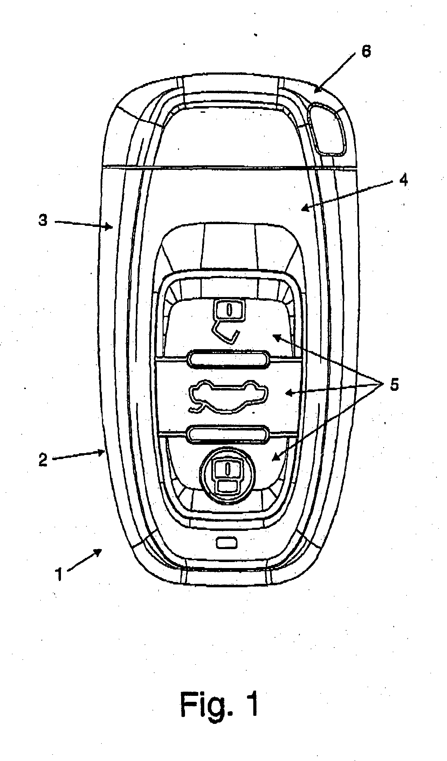

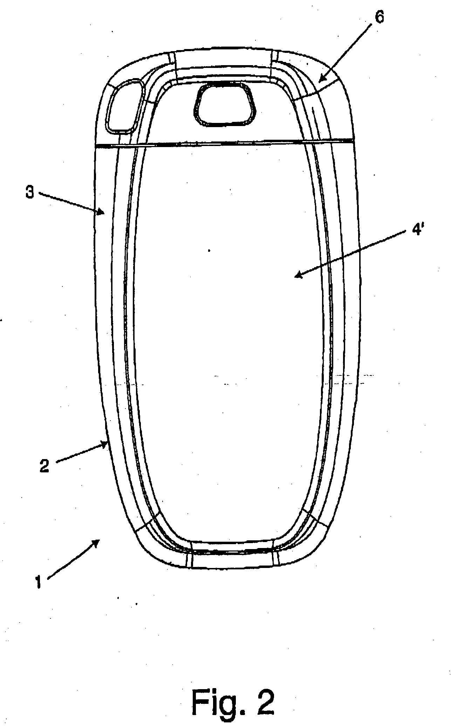

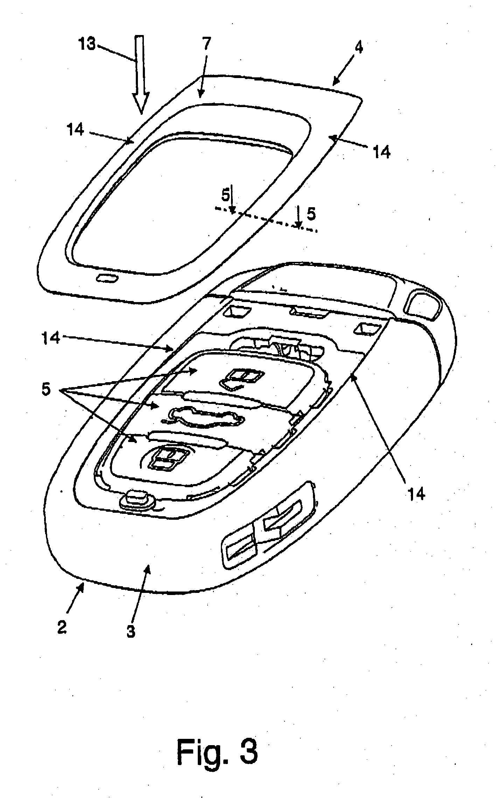

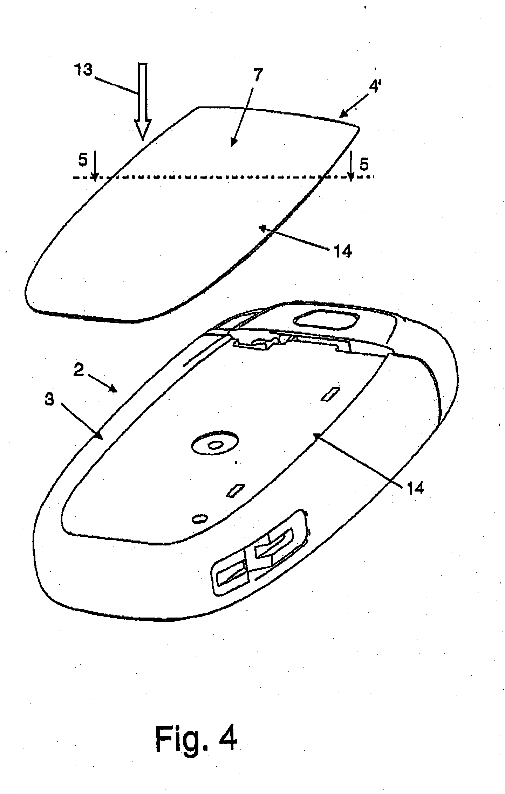

In Fig. 1 ist ein Schlüssel 1, und zwar ein elektronischer Schlüssel für ein Schließsystem eines Kraftfahrzeugs zu sehen. Der Schlüssel 1 besitzt ein Gehäuse 2, das ein Trägerteil 3 und ein am Trägerteil 3 angeordnetes Gehäuseelement 4 in der Art einer Blende umfaßt. Vorliegend besitzt das Gehäuse 2 sowohl an der Oberseite ein solches Gehäuseelement 4 als auch an der Unterseite ein ebensolches Gehäuseelement 4', wie man anhand von Fig. 2 erkennt. Während das Trägerteil 3 für das Auge des Benutzers weitgehend durch die Gehäuseelemente 4, 4' verdeckt ist und lediglich Teilbereiche zu sehen sind, weisen die Gehäuselemente 4,4' eine große sichtbare Oberfläche 7 (siehe Fig. 3 oder Fig. 4) auf. Am Gehäuse 2 sind weiterhin tastenertige Betätigungsorgane 5 angeordnet, die zum Öffnen und/oder Schließen der Zentralverriegelung für die Autotüren, den Kofferraumdeckel o. dgl. in der Art einer Fernbedienung dienen. Desweiteren weist das Gehäuse 2 noch einen abnehmbaren Verschluß 6 auf, um beispielsweise ein Auswechseln der Batterie des Schlüssels 1 zu gestatten.

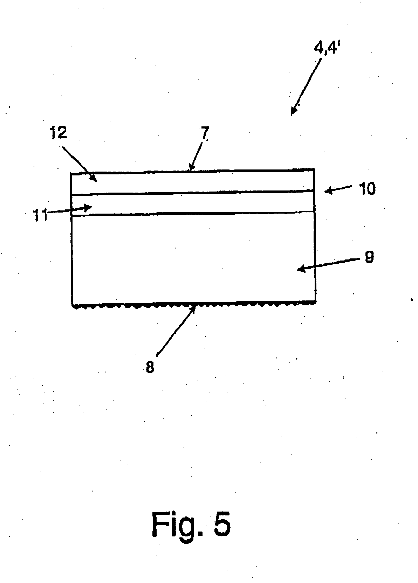

Das Gehäuseelement 4, 4' und das Trägerteil 3 bestehen aus Kunststoff, und zwar aus einem thermoplastischen Kunststoff. Beispielsweise können diese aus Polyamid hergestellt sein, wie in Fig. 5 anhand der Kunststoffschicht 9 dargestellt ist. Während die innerhalb des Gehäuses 2 befindliche und daher nichtsichtbare Oberfläche 8 des Gehäuseelements 4,4' eine übliche Rauhigkeit aufweist, wie in Fig. 5 anhand einer "welligen" Linie dargestellt ist, weist die sichtbare Oberfläche 7 eine verschwindende Rauhigkeit auf, wie hier mit einer geraden Linie dargestellt ist. Wie weiter in Fig. 5 gezeigt ist, ist das Gehäuseelement 4, 4' zusätzlich mit einem Klarlack 10 beschichtet. Der Klarlack 10 kann sich in Hinblick auf die Haftfestigkeit an der Kunststoffschicht 9 wiederum aus einer Grundierung 11 sowie einem Decklack 12 zusemmensetzen. Mit Hilfe dieser Maßnahmen ist somit das Gehäuseelement 4,4' an der sichtbaren Oberfläche 7 hochglänzend sowie kratzfest ausgestaltet.

Das Gehäuseelement 4,4' ist durch Schweißen auf dem Trägerteil 3 befestigt, womit eine hochwertige und auch ansprechende Verbindung gewährleistet ist. Als besonders zweckmäßig hat sich hierfür das Laserschweißen von Kunststoffen erwiesen. Zu diesem Zweck besteht das Gehäuseelement 4, 4' aus einem lasertransparenten Kunststoff, insbesondere also einem lasertransparenten Polyamid, und das Trägerteil 3 aus einem laserabsorbierenden Kunststoff, insbesondere also einem laserabsorbierenden Polyamid. Als Laserstrahlung für das Verschweißen von Kunststoffteilen haben sich Infrarot(IR)-Laser bewährt. Aus Designgründen ist häufig ein schwarzes Gehäuse 2 für den Schlüssel 1 gewünscht. In diesem Fall ist der Kunststoff für das Gehäuseelement 4,4' mittels eines entsprechenden Farbadditivs schwarz, und zwar insbesondere schwarz-IR-transparent für die Durchstrahlung des Lasers, eingefärbt. Der Kunststoff für das Trägerteil 3 ist mittels eines weiteren Farbadditivs ebenfalls schwarz, jedoch hierzu insbesondere schwarz-IR-absorbierend für die Laserstrahlung, eingefärbt.

Bei dem Klarlack 10 für das Gehäuseelement 4, 4' ist es bevorzugt, einen mittels Ultraviolett(UV)-Strahlung aushärtenden Klarlack 10 zu verwenden. Ein solcher Klarlack 10 bietet ein hohe Verschleißfestigkeit für das Gehäuse 2, insbesondere also für die Sichtoberfläche 7, das als Schlüssel 1 für ein Kraftfahrzeug in häufigem Gebrauch ist. Dabei ist der Klarlack 10 so gewählt, daß dessen Grundsubstrat für die jeweilig verwendete Kunststoffsorte des Gehäuseelements 4, 4' geeignet ist, vorliegend also für Polyamid geeignet ist und eine gute Haftung auf Polyamid aufweist. Ebenso ist das Grundsubstrat für den Klarlack 10 im Hinblick auf eine gute Laserlicht-Durchlässigkeit für die jeweils zum Laserschweißen verwendete Laserstrahlung, hier also IR-Strahlung, zu wählen.

Nachfolgend soll noch das Herstellverfahren für das Gehäuse 2 näher beschrieben werden.

Zunächst werden das Gehäuseelement 4,4' und das Trägerteil 3 mittels Spritzgießen von thermoplastischen Kunststoff in einem entsprechenden Spritzgießwerkzeug als Einzelteile hergestellt. Anders als bisher ist jedoch das Spritzgießwerkzeug für das Gehäuseelement 4, 4' zumindest in dem der sichtbaren Oberfläche 7 zugeordneten Bereich auf Hochglanz poliert. Dadurch ist eine glatte Sichtoberfläche 7 mit der gewünschten verschwindenden Rauhigkeit gewährleistet. Nach dem Abspritzen des Gehäuseelements 4,4' im Spritzgießwerkzeug wird das Gehäuseelement 4, 4'anschließend zumindest an der sichtbaren Oberfläche 7 mit dem Klarlack 10 lackiert. Nach Lackieren der sichtbaren Oberfläche 7 des Gehäuseelements 4, 4' wird der Klarlack dann mittels Ultraviolett(UV)-Strahlen ausgehärtet.

Danach wird das Gehäuseelement 4,4' am Trägerteil 3 mittels Laserdurchstrahlschweißen befestigt, wie in den Fig. 3 und 4 gezeigt ist. Wie bereits erwähnt ist der Kunststoff für das Gehäuseelement 4, 4' schwarz-(IR-)transparent für die Durchstrahlung des Lasers 13 eingefärbt und der Kunststoff für das Trägerteil 3 ist schwarz-(IR-)absorbierend für die Laserstrahlung 13 eingefärbt. Die im Infrarot(IR)-Spektrum befindliche Laserstrahlung 13 durchdringt somit im wesentlichen das Laserlichtdurchlässige Grundmaterial der Blenden 4, 4' ebenso wie den Laserlichtdurchlässigen Klarlack 10 und wird im Trägerteil 3 im wesentlichen absorbiert, was im Trägerteil 3 zur entsprechenden Erwärmung und Verschweißung der Blende 4,4' mit dem Trägerteil 3 führt, derart daß das Gehäuseelement 4,4' an dessen nichtsichtbarer Oberfläche 8 mit dem Trägerteil 3 stoffschlüssig verbunden ist. Die Verschweißung erfolgt dabei durch Führung der Laserstrahlen 13 entlang einer gewünschten Laserschweißkontur 14. Zweckmäßiger wird die Laserschweißnaht 14 entlang des Randes am Umfang der Blenden 4,4' gewählt. Mit Hilfe dieses Verfahrens ist es möglich, die Blenden 4,4' auf das Gehäuse 2 des Schlüssels 1 zu schweißen, wobei das Innere des Gehäuses 2 an den Blenden 4, 4' weitgehend gegen die Umgebung abgedichtet ist, und dabei einen optisch hochwertigen sowie kratzfesten Schlüssel 1 herzustellen.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann ein solcher Schlüssel nicht nur bei Kraftfahrzeugen, sondern auch bei beliebigen Schließsystemen, beispielsweise in der Gebäudetechnik, Verwendung finden. Desweiteren kann ein erfindungsgemäßes Gehäuse nicht nur für ein Schlüsselgehäuse sondern auch für sonstige Gehäuse mit hochwertiger Anmutung, beispielsweise solchen von Fernbedienungen für Fernseh- und/oder Audiogeräten, von Mobiltelefonen o. dgl. Verwendung finden. Schließlich können nicht nur die Blenden sondern auch das Trägerteil an der Sichtfläche hochglänzend ausgestaltet sein, um somit ein vollständig hochglänzendes Gehäuse zu schaffen.

### Bezugszeichen-Liste:

- 1:: Schlüssel
- 2:: Gehäuse
- 3:: Trägerteil
- 4,4':: Gehäuseelement / Blende
- 5:: Betätigungsorgan
- 6:: Verschluß
- 7:: sichtbare Oberfläche (von Gehäuseelement) / Sichtoberfläche
- 8:: nichtsichtbare Oberfläche (von Gehluseelement)
- 9:: Kunststoffschicht
- 10:: Klarlack
- 11:: Grundierung / Grundierlack
- 12:: Decklack
- 13:: Durchstrahlung Laser / Laserstrahlung
- 14:: Laserschweißkontur / Laserschweißnaht

## Patentansprüche

1. Verfahren zur Herstellung eines Gehäuses (2), insbesondere für einen elektronischen Schlüssel (1) eines Schließsystems eines Kraftfahrzeugs, wobei das Gehäuse (2) ein Trägerteil (3) und ein am Trägerteil (3) befestigtes, eine sichtbare Oberfläche (7) aufweisendes Gehäuseelement (4, 4'), insbesondere in der Art einer Blende umfasst, wobei das Gehäuseelement (4, 4') und das Trägerteil (3) aus Kunststoff, insbesondere aus thermoplastischem Kunststoff, bestehen, wobei das Gehäuseelement (4, 4') und das Trägerteil (3) mittels Spritzgießen hergestellt werden, und wobei das Gehäuseelement (4, 4') an dessen nicht sichtbarer Oberfläche (8) am Trägerteil (3) mittels Laserschweißen stoffschlüssig befestigt
wird, **dadurch gekennzeichnet, dass** das Spritzgießwerkzeug für das Gehäuseelement (4, 4') für die sichtbare Oberfläche (7) auf Hochglanz poliert ist, dass das Gehäuseelement (4, 4') im Spritzgießwerkzeug mit einer glatten Sichtöberfläche (7) hochglänzend ausgestaltet sowie mit einer üblichen Rauigkeit aufweisenden, nicht sichtbaren Oberfläche (8) abgespritzt wird, und dass die Hochglanzoberfläche zur Befestigung des Gehäuseelementes (4, 4') auf dem darunter liegenden Trägerteil (3) gelasert wird, wobei das Gehäuseelement (4, 4') von den Laserstrahlen durchstrahlt wird.

2. Verfahren zur Herstellung eines Gehäuses (2) nach Anspruch 1, **dadurch gekennzeichnet, daß** das Gehäuseelement (4, 4') zumindest an der sichtbaren Oberfläche (7) mit einem Klarlack (10) lackiert wird, insbesondere derart daß zumindest die sichtbare Oberfläche (7) kratzfest ausgestaltet ist.

3. Verfahren zur Herstellung eines Gehäuses (2) nach Anspruch 1 oder 2, **dadurch gekennzeichnet, daß** beim Verschweißen die Laserstrahlung (13) das Gehauseelement (4, 4') im wesentlichen durchdringt und im Trägerteil (3) im wesentlichen absorbiert wird, daß vorzugsweise es sich bei der Laserstrahlung (13) um eine Infrarot(IR)-Laserstrahlung handelt, daß weiter vorzugsweise der Kunststoff für das Gehäuseelement (4, 4') weitgehend transparent, insbesondere schwarz-(IR-)transparent, für die Durchstrahlung des Lasers (13) eingefärbt ist, und daß noch weiter vorzugsweise der Kunststoff für das Trägerteil (3) weitgehend absorbierend, insbesondere schwarz-(IR-)absorbierend für die Laserstrahlung (13) eingefärbt ist.

4. Verfahren zur Herstellung eines Gehäuses (2) nach Anspruch 1, 2 oder 3, **dadurch gekennzeichnet, daß** der Klarlack (10) nach Lackieren der sichtbaren Oberfläche (7) des Gehäuseelements (4, 4') mittels Ultraviolett(UV)-Strahlen ausgehärtet wird, daß vorzugsweise das Gehäuseelement (4, 4') vor dem Verschweißen mit dem Klarlack (10) beschichtet wird, und daß weiter vorzugsweise der Klarlack (10), der insbesondere aus einem Grundierlack sowie einem Decklack besteht, im wesentlichen transparent für die Laserstrahlung (13) ist.

## Claims

1. Method for producing a housing (2), in particular for an electronic key (1) of a locking system of a motor vehicle, the housing (2) comprising a carrier part (3) and a housing element (4, 4'), which is fastened to the carrier part (3) and has a visible surface (7), in particular similar to a faceplate, the housing element (4, 4') and the carrier part (3) consisting of plastic, in particular of thermoplastic, the housing element (4, 4') and the carrier part (3) being produced by means of injection moulding, and the housing element (4, 4') being fastened on its non-visible surface (8) to the carrier part (3) in an form fitting manner by means of laser welding, **characterized in that** the injection mould for the housing element (4, 4') for the visible surface (7) is highly polished, **in that** in the injection mould the housing element (4, 4') is formed with a smooth visible surface (7) in a high-gloss manner and finished with a non-visible surface (8) having a customary roughness, and **in that** the high-gloss surface is lasered for the fastening of the housing element (4, 4') on the carrier part (3) lying thereunder, the housing element (4, 4') being passed through by the laser beams.

2. Method for producing a housing (2) according to Claim 1, **characterized in that** the housing element (4, 4') is coated at least on the visible surface (7) with a varnish (10), in particular in such a way that at least the visible surface (7) is of a scratch-resistant form.

3. Method for producing a housing (2) according to Claim 1 or 2, **characterized in that**, during the welding, the laser radiation (13) substantially penetrates the housing element (4, 4') and is substantially absorbed in the carrier part (3), **in that** the laser radiation (13) is preferably an infrared (IR) laser radiation, **in that** further preferably the plastic for the housing element (4, 4') is coloured as largely transparent, in particular black-(IR-)transparent, for the transmission of the laser (13), and **in that** still further preferably the plastic for the carrier part (3) is coloured as largely absorbent, in particular black-(IR)-absorbent, for the laser radiation (13).

4. Method for producing a housing (2) according to Claim 1, 2 or 3, **characterized in that**, after coating the visible surface (7) of the housing element (4, 4'), the varnish (10) is cured by means of ultraviolet (UV) rays, **in that** preferably the housing element (4, 4') is coated with the varnish (10) before the welding, and **in that** further preferably the varnish (10), which consists in particular of a primer and a topcoat, is substantially transparent for the laser radiation (13).

## Revendications

1. Procédé pour fabriquer un boîtier (2), en particulier pour une clé électronique (1) d'un système de fermeture d'un véhicule automobile, dans lequel le boîtier (2) comprend une partie de support (3) et un élément de boîtier (4, 4') fixé à la partie de support (3) et présentant une surface visible (7), en particulier à la manière d'un écran, dans lequel l'élément de boîtier (4, 4') et la partie de support (3) se composent de matière plastique, en particulier d'une matière plastique thermoplastique, dans lequel on fabrique l'élément de boîtier (4, 4') et la partie de support (3) par moulage par injection, et dans lequel on fixe l'élément de boîtier (4, 4') par sa surface non visible (8) à la partie de support (3) en continuité de matière par soudage au laser, **caractérisé en ce que** l'outil de moulage par injection pour l'élément de boîtier (4, 4') est finement poli pour la surface visible (7), **en ce que** l'on moule par injection l'élément de boîtier (4, 4') dans l'outil de moulage par injection avec une surface visible lisse (7) à structure hautement brillante ainsi qu'avec une surface non visible (8) présentant une rugosité usuelle, et **en ce que** l'on traite au laser la surface hautement brillante pour la fixation de l'élément de boîtier (4, 4') sur la partie de support sous-jacente (3), dans lequel l'élément de boîtier (4, 4') est traversé par les rayons laser.

2. Procédé de fabrication d'un boîtier (2) selon la revendication 1, **caractérisé en ce qu'**on laque l'élément de boîtier (4, 4') au moins sur la surface visible (7) avec une laque transparente (10), en particulier de telle manière qu'au moins la surface visible (7) soit résistante aux griffures.

3. Procédé de fabrication d'un boîtier (2) selon la revendication 1 ou 2, **caractérisé en ce que** lors du soudage le rayonnement laser (13) traverse essentiellement l'élément de boîtier (4, 4') et est essentiellement absorbé dans la partie de support (3), **en ce que** le rayonnement laser (13) est de préférence un rayonnement laser infrarouge (IR), **en ce que** la matière plastique pour l'élément de boîtier (4, 4') est de préférence encore colorée de façon largement transparente, en particulier noire transparente aux IR, pour la traversée par le laser (13), et **en ce que** de préférence encore la matière plastique pour la partie de support (3) est colorée de façon largement absorbante, en particulier absorbante noire pour les IR, pour le rayonnement laser (13).

4. Procédé de fabrication d'un boîtier (2) selon la revendication 1, 2 ou 3, **caractérisé en ce que** la laque transparente (10) est durcie au moyen de rayons ultraviolets (UV) après le laquage de la surface visible (7) de l'élément de boîtier (4, 4'), **en ce que** de préférence on revêt l'élément de boîtier (4, 4') avant le soudage avec la laque transparente (10), et **en ce que** de préférence encore la laque transparente (10), qui se compose en particulier d'une laque de base ainsi que d'une laque de finition, est essentiellement transparente pour le rayonnement laser (13).
